# DEMANDE DE BREVET EUROPEEN

(11) **EP 0 678 691 A1**
(43) Date de publication de la demande: **25.10.1995**
(21) Numéro de dépôt: 95400572.4
(22) Date de dépôt: 15.03.1995
(51) Int. Cl.: F16J 9/10

(54) **Dispositif de contrôle de la présence des segments dans les gorges d'un piston**

(30) Priorité: 25.03.1994 FR 9403556
(71) Demandeur: RENAULT AUTOMATION, F-92100 Boulogne (FR)
(72) Inventeur: Thurier, Yvan, F-94320 Thiais (FR); Couloumy, Jean-Pierre, F-91080 Courcouronnes (FR)
(74) Mandataire: Robert, Jean-Pierre

(57) **Abrégé**

Dispositif de contrôle de la présence des segments (2, 3, 4) dans les gorges d'un piston (1) notamment de moteur à combustion interne, comportant un poussoir latéral (5) mobile en direction (A) du piston (1), au niveau de sa zone extérieure segmentée et un détecteur (8) disposé à l'opposé du poussoir (5) par rapport au piston (1), dans lequel le poussoir (5) comporte une face active (7) sensiblement parallèle à l'axe du piston porté par un support (6) vibrant.

## Description

La présente invention concerne un dispositif pour contrôler qu'un piston, notamment de moteur à combustion interne ou de compresseur, est bien équipé de ses segments d'étanchéité. Ce contrôle est en effet nécessaire du fait du caractère automatique de la mise en place des segments sur les pistons.

Le principe de ce contrôle est parfaitement connu et les moyens généraux mis en oeuvre également. C'est ainsi que selon une de ces techniques connues, on présente le piston la tête en bas verticalement dans un dispositif de son maintien et on approche de la zone segmentée du piston un nez de poussoir qui vient enfoncer le ou les segments que porte le piston en fond de gorge, au niveau d'une génératrice tandis que l'on détecte en face de la génératrice opposée la saillie que forme le segment ainsi déplacé.

On s'est cependant rendu compte que certaines fois, malgré l'action du poussoir, l'un au moins des segments bloque et n'est pas enfoncé à fond de gorge, si bien qu'au niveau de la génératrice opposée, on ne détecte pas la saillie nécessaire à justifier la présence de ce segment dans sa gorge donc à valider le montage. A l'examen, on s'est aperçu que le non-enfoncement d'un segment à fond de gorge tient essentiellement au fait que le bord de la fente du segment bute contre le bord de la gorge empêchant l'enfoncement du segment dans celle-ci. Ce défaut n'est pas très fréquent mais peut conduire à l'élimination d'un piston correctement pourvu de ses segments.

La présente invention entend remédier à l'inconvénient rencontré par les dispositifs actuels utilisant le principe rappelé ci-dessus. C'est ainsi qu'elle concerne un dispositif de contrôle de la présence des segments dans les gorges d'un piston, comportant un poussoir latéral mobile en direction du piston au niveau de la zone extérieure segmentée et un détecteur disposé à l'opposé du poussoir par rapport au piston, dans lequel le poussoir comporte une face active sensiblement parallèle à l'axe du piston porté par un support vibrant. Ainsi, la surface en contact avec les segments transmet-elle à ces segments une vibration, c'est-à-dire engendre des micro-mouvements rapides du segment à l'intérieur de la gorge et, surtout, des micro-mouvements des extrémités de segment voisines de la fente lorsque cette fente de segment est située non loin de la zone d'action du poussoir, favorisant la pénétration du segment en fond de gorge et supprimant tout risque d'accrochage d'une extrémité de ce segment avec un bord de gorge.

Dans un mode préféré de réalisation du dispositif selon l'invention, le support vibrant comporte une platine attelée au nez du poussoir par une articulation du genre à rotule, cette platine comportant une piste interne circulaire parallèle à la face active du poussoir dans laquelle est logée une bille propulsée pneumatiquement le long de la piste. Cette bille, en tournant, constitue un balourd qui engendre une vibration circulaire de la platine autour de son articulation au nez du poussoir, cette articulation comportant bien entendu des butées limitant l'amplitude de la vibration.

De manière préférée, l'articulation du genre à rotule est en fait constituée par deux axes d'articulation perpendiculaires, la platine étant articulée par un étrier à une pièce autour d'un premier axe, cette pièce intermédiaire étant elle-même articulée au nez du poussoir autour d'un deuxième axe perpendiculaire au premier axe d'articulation de l'étrier.

D'autres caractéristiques et avantages ressortiront de la description donnée ci-après d'un mode de réalisation de l'invention.

Il sera fait référence aux dessins annexés parmi lesquels :
- la figure 1 est une vue générale schématique d'un dispositif de contrôle conforme à l'invention,
- la figure 2 est une vue de face de l'extrémité active du poussoir du dispositif de la figure 1,
- la figure 3 est une vue de dessus de cette extrémité active avec une portion en coupe selon un plan perpendiculaire à la face active de cette extrémité,
- la figure 4 est une vue en coupe selon la ligne IV-IV de la figure 2.

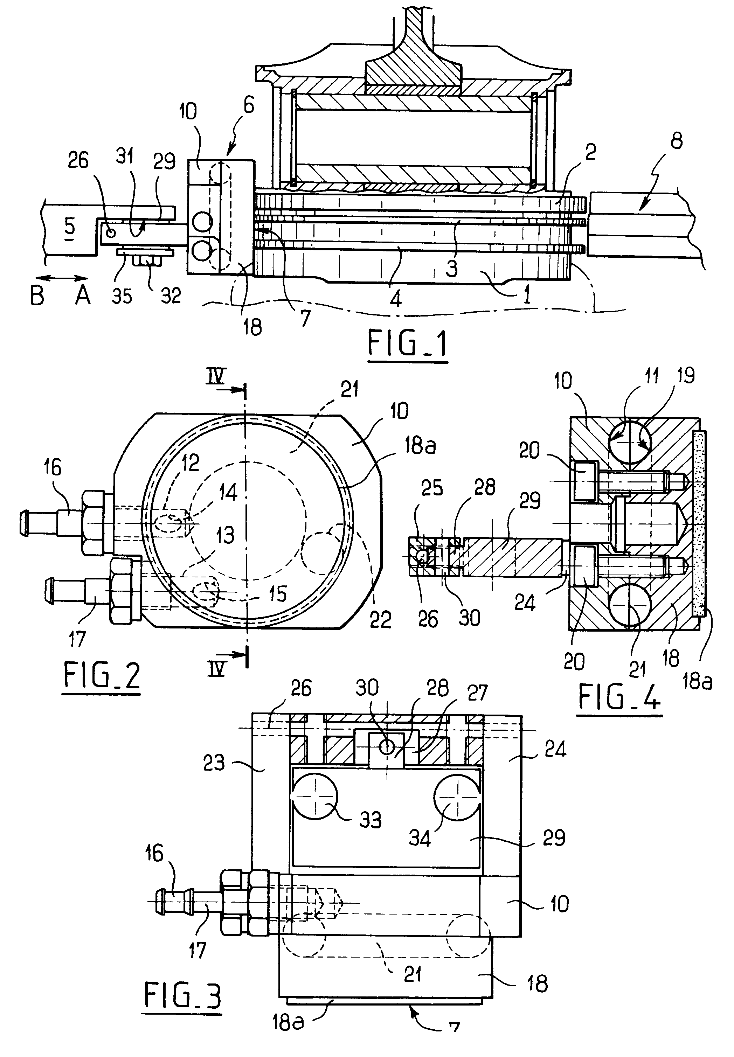

A la figure 1, le piston 1 à contrôler est disposé la tête en bas dans un appareillage non représenté qui le maintient fixe dans un poste de contrôle destiné à vérifier qu'il est bien équipé de segments tels que ceux 2, 3 et 4 représentés. A ce poste de contrôle, l'accès latéral de la zone segmentée des pistons est libre de sorte qu'un poussoir 5 peut s'approcher (flèche A) ou s'éloigner (flèche B) de la surface latérale du piston. Ce poussoir 5 possède une pièce d'extrémité 6 dont une surface d'extrémité 7 sensiblement verticale peut être portée au contact du piston 1. Diamétralement opposé au poussoir, le poste de contrôle comporte un détecteur 8 de la présence des segments 2, 3 et 4. Ce détecteur réagit de manière connue lorsque les segments, qui sont montés librement dans des gorges du piston 1, sont excentrés au maximum par rapport au piston en direction du détecteur sous l'effet du poussoir.

L'invention concerne plus particulièrement la pièce 6 montée au nez du poussoir 5. Cette pièce 6 comporte une première plaque 10 dont une des faces est creusée d'une rainure demi-torique 11. Elle comporte également deux orifices cylindriques parallèles 12 et 13 qui sont en intersection avec le fond de la rainure 11 de manière à définir deux ouvertures 14 et 15 par lesquelles communiquent les orifices 12 et 13 avec la rainure 11. Ces orifices 12 et 13 sont taraudés de manière à pouvoir recevoir des embouts de connexion 16 et 17 pour l'amenée dans la rainure d'un fluide sous pression et pour son échappement.

La plaque 10 est recouverte d'une plaque conjuguée 18 qui possède également une rainure demi-torique 19 et lorsque les deux plaques 10 et 18 sont assemblées l'une à l'autre par des vis 20, les rainures 11 et 19 forment un canal torique 21 dans lequel est logée une bille 22. La plaque 18 possède une surface plane 7 d'extrémité. Plus exactement, la plaque 18 comporte une plaquette 18a rapportée, en un matériau à faible coefficient de frottement et faible usure tel qu'une céramique qui porte la surface 7.

La fixation de cette pièce 6 au nez du poussoir 5 est assurée au moyen de deux bras 23, 24, perpendiculaires à la plaque 10 et s'étendant à l'arrière de celle-ci, l'extrémité libre de ces deux bras étant articulée à un barreau intermédiaire 25 autour d'un axe 26 parallèle à la face d'extrémité 7 de la pièce 6. Ce barreau 25 est quant à lui pourvu d'un logement 27 dans lequel est logé avec jeu latéral un tenon 28 solidaire d'une plaque 29 disposé entre les deux bras 23 et 24, le barreau 25 et la plaque 10. Le tenon 28 est articulé au barreau 25 autour d'un axe 30 orthogonal à l'axe 26.

Si on suppose la plaque 29 fixe, on comprend que par le montage décrit ci-dessus, la pièce 6 peut d'une part osciller par rapport à la plaque autour de l'axe 26, et d'autre part, avec une amplitude limitée par le contact entre la plaque 29 et le barreau 25 autour de l'axe 30 orthogonal à l'axe 26. La pièce 6 possède donc par rapport à la plaque 29 des degrés de liberté semblables à ceux d'une articulation à rotule, limités en amplitude à de petits mouvements.

La fixation de l'ensemble ainsi décrit au nez du poussoir 5 est assurée de la manière suivante. Le nez du poussoir 5 possède une surface inférieure 31 sur laquelle la plaque 29 est rapportée par deux vis 32 qui la traversent dans les orifices 33 et 34. Entre les têtes de vis 32 et la plaque 29, on a disposé une plaque débordante 35 qui avec la surface 31 constituent les butées limitant le pivotement angulaire des bras 23 et 24 autour de l'axe 26.

En fonctionnement, on commande simultanément le mouvement du poussoir en direction A du piston 1 et l'alimentation de la gorge torique 21 en fluide sous pression par l'orifice 12 et l'ouverture 14. Le fluide sous pression pousse la bille 22 et l'anime d'un mouvement de rotation rapide dans le canal 21 qui forme une piste. Cette bille constitue donc un balourd pour la pièce 6 qui peut osciller par rapport au nez du poussoir 5 et autour des axes 26 et 30 si bien que le contact entre les segments 2, 3 et 4 et la surface frontale 7 de la pièce 6, est un contact frottant qui transmet une vibration aux segments grâce à laquelle la pénétration de ceux-ci en fond de gorge est facilitée. Cette vibration en effet élimine tout risque de butée intempestive d'une extrémité de segment contre le bord d'une gorge qui interdirait la pénétration de ce segment à l'intérieur de cette gorge.

Par les dispositions de l'invention, on a ainsi éliminé la principale cause de détection défectueuse habituellement rencontrée dans ce type de poste de contrôle.

## Revendications

1. Dispositif de contrôle de la présence des segments (2, 3, 4) dans les gorges d'un piston (1) notamment de moteur à combustion interne, comportant un poussoir latéral (5) mobile en direction (A) du piston (1), au niveau de sa zone extérieure segmentée et un détecteur (8) disposé à l'opposé du poussoir (5) par rapport au piston (1), caractérisé en ce que le poussoir (5) comporte une face active (7) sensiblement parallèle à l'axe du piston porté par un support (6) vibrant.

2. Dispositif selon la revendication 1, caractérisé en ce que le support (6) vibrant comporte une platine (10, 18) attelée au nez du poussoir (5) par une articulation (26, 30) du genre à rotule, cette platine (10, 18) comportant une piste interne (21) circulaire parallèle à la face active (7) du poussoir dans laquelle est logée une bille (22) propulsée pneumatiquement le long de la piste (21).
